# EUROPÄISCHE PATENTANMELDUNG

(11) **EP 4 299 491 A1**
(43) Veröffentlichungstag der Anmeldung: **03.01.2024**
(21) Anmeldenummer: 23175222.1
(22) Anmeldetag: 25.05.2023
(51) Int. Cl.: B65G 47/86

(54) **BEHÄLTERHANDHABUNGSANORDNUNG UND VERFAHREN ZUR HANDHABUNG VON BEHÄLTERN**

(30) Priorität: 27.06.2022 DE 102022115882
(71) Anmelder: KHS GmbH, 44143 Dortmund (DE)
(72) Erfinder: Lewin, Frank, 22889 Tangstedt (DE); Klein, Jan Fabian, 22337 Hamburg (DE); Fritsche, Claas, 44143 Dortmund (DE)

(57) **Zusammenfassung**

Die Erfindung betrifft eine Behälterhandhabungsanordnung mit einem eine Rotationsachse (10) aufweisenden Teilungsverzugsstern (4), welcher eine Aufnahmeposition (5) für die Aufnahme von in einem ersten Abstand (a₁) zueinander zugeführten Behälter (1), eine Abgabeposition (7) zur Abgabe der Behälter mit einem zweiten Abstand (a₂) zueinander und eine Transportstrecke (6) zwischen der Aufnahmeposition (5) und der Abgabeposition (7) aufweist. Erfindungsgemäß ist vorgesehen, dass an der Transportstrecke (6) eine Arbeitseinrichtung (8) angeordnet ist, welche dazu eingerichtet ist, mit den vorbeigeführten Behältern (1) über einen Zusammenwirkabschnitt (9) zusammenzuwirken.

## Beschreibung

Die Erfindung betrifft eine Behälterhandhabungsanordnung mit einem eine Rotationssachse aufweisenden Teilungsverzugsstern, welcher eine Aufnahmeposition für die Aufnahme von in einem ersten Abstand zueinander zugeführten Behältern, eine Abgabeposition zur Abgabe der Behälter mit einem zweiten Abstand zueinander und eine Transportstrecke zwischen der Aufnahmeposition und der Abgabeposition aufweist.

Bei der Herstellung, Befüllung und weiteren Handhabung von Getränkebehältern sind in der Praxis verschiedene Ansätze bekannt, wobei in der Regel hohe Durchsätze bei einem konstruktiv möglichst einfachen Aufbau und einer hohen Zuverlässigkeit angestrebt werden.

Dabei ist auch zu beachten, dass mehrere aufeinanderfolgende Arbeits- und Behandlungsschritte wie beispielsweise eine Reinigung, eine Sterilisation, ein Befüllen, ein Beschriften, ein Etikettieren und ein Verschließen aneinander anschließen. Bei Einweg-Behältern kann auch der Fertigungsprozess der einzelnen Behälter insbesondere in Form von Flaschen unmittelbar vor dem Befüllen und weiteren Behandlungsschritten in einem kontinuierlichen, integrierten Prozess erfolgen.

Die erfindungsgemäße Behälterhandhabungsanordnung kann insbesondere bei der Handhabung von PET-Einwegflaschen zum Einsatz kommen, welche aus Vorformlingen in einer Blasformmaschine geblasen werden.

Die verschiedenen Handhabungsschritte sind dem Fachmann aus der Praxis bekannt. Gerade bei den beschriebenen PET-Einwegflaschen aber auch bei anderen Getränkebehältnissen werden zumindest für einen Teil der Handhabung sogenannte verblockte Anlagen eingesetzt. Dabei werden die Behältnisse kontinuierlich über verschiedene Behandlungsstationen gefördert und bleiben dabei im Eingriff mit entsprechenden Halteeinrichtungen. Entsprechende Anlagen verfügen häufig über eine Vielzahl von aufeinanderfolgenden Karussellen, welche die Behälter untereinander direkt übergeben. Die verschiedenen Karusselle sind so miteinander synchronisiert, dass die Behälter unmittelbar lagerichtig übergeben werden, wobei sich bei einer verblockten Anlage auch an den verschiedenen Abschnitten in einer vorgegebenen Betriebssituation ein gleicher Durchsatz ergibt.

Abhängig von den unterschiedlichen Handhabungsschritten ist in der Praxis ein geeigneter Abstand zwischen den aufeinanderfolgenden Behältern entlang ihrer Bahn vorzusehen. Mit der Maßgabe, dass der Durchsatz entlang der verschiedenen Behandlungsstationen gleichbleibend ist, ist dann entsprechend auch eine Anpassung der Bahngeschwindigkeit notwendig, wobei sich der Durchsatz als Quotient von Bahngeschwindigkeit und Abstand ergibt.

Um zwischen zwei Behandlungsstationen den Abstand der Behälter entlang ihrer Bahn sowie entsprechend die Bahngeschwindigkeit anzupassen, sind gattungsgemäße Behälterhandhabungsanordnungen mit einem Teilungsverzugsstern bekannt, welcher auch als Teilungswechselstern bezeichnet wird. Gattungsgemäße Teilungsverzugssterne sind beispielsweise aus der DE 10 2015 110 462 A1, DE 10 2018 217 776 A1 und DE 10 2020 112 381 A1 bekannt.

Gemäß einer üblichen Bauform weisen die Teilungsverzugssterne jeweils einen um eine Rotationssachse drehbar angetriebenen Träger und an dem Träger schwenkbar angeordnete Behälterhalter auf. Durch das Verschwenken der Behälterhalter kann der Abstand von aufgenommenen Behältern untereinander entlang der Transportstrecke verändert werden. Durch das fortwährende Verschwenken der Behälterhalter entlang der Transportstrecke können die Behälter je nach Bedarf aufeinander zu oder voneinander weg bewegt werden. Des Weiteren ergeben sich eine Änderung des Abstandes sowie eine entsprechende Änderung der Geschwindigkeit auch dadurch, dass durch die Schwenkbewegung der Bahnradius um die Rotationssachse des Trägers verändert wird.

Das Verschwenken der Behälterhalter während der Bewegung entlang der Transportstrecke kann auf besonders einfache, zuverlässige und reproduzierbare Weise durch eine Kurvenführung, beispielsweise in Form einer Kurvenscheibe, realisiert sein. Der Träger selbst rotiert dann in einer gleichbleibenden, im Hinblick auf den eingestellten Durchsatz angepassten Rotationsgeschwindigkeit, wobei dann entlang der Transportstrecke der Abstand der Behälter wie beschrieben je nach Ausgestaltung des Teilungsverzugssterns erhöht oder verringert wird. Dabei versteht sich, dass die Behälterhalter bei aufeinanderfolgenden Drehungen des Trägers stets einen gleichen Bewegungsablauf durchlaufen. Wenn also die aufgenommenen Behälter zwischen der Aufnahmeposition und der Abgabeposition voneinander entfernt werden, vollziehen dann die Behälterhalter nach der Abgabeposition im unbeladenen Zustand eine entsprechende Rückstellbewegung.

Der vorliegenden Erfindung liegt die Aufgabe zugrunde, eine Behälterhandhabungsanordnung mit einer verbesserten Funktionalität anzugeben. Insbesondere soll die Behälterhandhabungsanordnung bei der Integration in eine Gesamtanlage zu einer Vereinfachung und einer kompakteren Bauform sowie einer Kostenreduzierung beitragen. Des Weiteren soll auch ein Verfahren zur Handhabung von Behältern angegeben werden.

Gegenstand der Erfindung und Lösung der Aufgabe sind eine Behälterhandhabungsanordnung gemäß Patentanspruch 1 sowie ein Verfahren zur Handhabung von Behältern gemäß Patentanspruch 11.

Ausgehend von einer gattungsgemäßen Behälterhandhabungsanordnung ist vor diesem Hintergrund vorgesehen, dass an der Transportstrecke eine Arbeitseinrichtung angeordnet ist, welche dazu eingerichtet ist, mit den vorbeigeführten Behältern über einen Zusammenwirkabschnitt zusammenzuwirken.

Während bei herkömmlichen Behälterhandhabungsanordnungen der Teilungsverzugsstern lediglich dazu vorgesehen ist, eine Abstands- und Geschwindigkeitsanpassung zwischen zwei Arbeitsstationen zu erreichen, ist erfindungsgemäß eine Arbeitseinrichtung direkt an der Transportstrecke des Teilungsverzugssterns angeordnet, sodass durch diese Doppelfunktion eine erhebliche Effizienzsteigerung erreicht werden kann. Ausgehend von einer Ausgestaltung, bei der die Arbeitseinrichtung einem separaten Karussell zugeordnet ist, kann ein solches Karussell nun unter erheblicher Verringerung der Kosten und des Platzbedarfes eingespart werden.

Erfindungsgemäß ist auch vorgesehen, dass bezogen auf die Rotationssachse die Arbeitseinrichtung an dem Zusammenwirkabschnitt über eine gewisse Länge und somit auch einen gewissen Winkelbereich in Bezug auf die Rotationssachse einwirken kann. Der Zusammenwirkabschnitt kann sich beispielsweise über einen Winkelbereich zwischen 2° und 40°, bevorzugt zwischen 4° und 20°, besonders bevorzugt zwischen 5° und 10° erstrecken.

Dabei ist es besonders zweckmäßig, wenn der Teilungsverzugsstern dazu eingerichtet ist, die Behälter entlang des Zusammenwirkabschnittes mit einer konstanten oder im Wesentlichen konstanten Bahngeschwindigkeit zu führen. Eine im Wesentlichen konstante Bahngeschwindigkeit liegt insbesondere dann vor, wenn die Änderung der Bahngeschwindigkeit entlang des Zusammenwirkabschnittes weniger als 2 % und insbesondere weniger als 1 % der Änderung der Bahngeschwindigkeit zwischen der Aufnahmeposition und der Abgabeposition beträgt.

Insbesondere ist dabei vorgesehen, dass der Teilungsverzugsstern dazu eingerichtet ist, die Behälter entlang des Zusammenwirkabschnittes mit einer gleichbleibenden oder im Wesentlichen gleichbleibenden Winkelgeschwindigkeit und mit einem gleichbleibenden oder im Wesentlichen gleichbleibenden Abstand zur Rotationssachse zu führen.

Der Teilungsverzugsstern ist grundsätzlich dazu vorgesehen, zwischen der Aufnahmeposition und der Abgabeposition den Abstand der aufeinanderfolgenden Behälter und somit auch entsprechend deren Geschwindigkeit zu verändern. Gemäß der beschriebenen bevorzugten Ausgestaltung wird diese Änderung jedoch an dem Zusammenwirkabschnitt unterbrochen, um mit der Arbeitseinrichtung ein Zusammenwirken mit den Behältern unter definierten Bedingungen zu ermöglichen.

So sind beispielsweise verschiedene Arbeitseinrichtungen bekannt, die an herkömmlichen Karussellen angeordnet werden können.

Gemäß einer bevorzugten Ausgestaltung der Erfindung ist die Arbeitseinrichtung eine Beschriftungseinrichtung, mit der Markierungen auf den Behältern während des laufenden Handhabungsprozesses aufgebracht werden können. Dabei kann es sich beispielsweise um Markierungen handeln, welche sich auf den konkreten Produktionszeitraum bzw. die konkreten Produktionsbedingungen beziehen und welche somit zeitlich veränderlich sein können und unterschiedlichen Behältern individuell zugeordnet werden sollen. Konkret kann es sich beispielsweise um Chargennummern, ein Haltbarkeitsdatum, einen individuellen 1-dimensionalen Code (beispielsweise Barcode), einen individuellen 2-dimensionalen Code (beispielsweise QR-Code) oder dergleichen handeln.

Die Beschriftungseinrichtung kann beispielsweise Markierungen mit einem Tintenstrahl-Druckwerk und/oder einem Laser erzeugen. Entsprechende für die Anordnung an einem herkömmlichen Karussell geeignete Beschriftungseinrichtungen müssen im Rahmen der Erfindung nicht weiter angepasst werden, wenn die Behälter entlang des Zusammenwirkabschnittes mit einer gleichbleibenden oder im Wesentlichen gleichbleibenden Winkelgeschwindigkeit und einem gleichbleibenden oder im Wesentlichen gleichbleibenden Abstand zur Rotationssachse geführt werden.

Etwaige Korrekturen für Verzerrungen entlang der Bahn der Behälter sowie hinsichtlich der Fokussierung eines Lasers müssen allenfalls einen herkömmlichen Kreisbogen berücksichtigen und keine komplexe Veränderung der Abstände und Geschwindigkeiten, die üblicherweise bei einem herkömmlichen Teilungsverzugsstern zwischen der Aufnahmeposition und der Abgabeposition kontinuierlich auftreten.

Die Transportstrecke kann sich bezogen auf die Rotationssachse beispielsweise über einen Winkelbereich zwischen 90° und 320°, insbesondere zwischen 160° und 270° erstrecken. Nach der Abgabe der Behälter an der Abgabeposition erfolgt eine Rückstellbewegung, um dann wieder an der Aufgabeposition Behälter mit dem ersten Abstand und einer ersten Geschwindigkeit aufnehmen zu können.

Gemäß einer grundsätzlich bekannten Bauform weist der Teilungsverzugsstern vorzugsweise einen rotierend antreibbaren Träger und an dem Träger schwenkbar angeordnete Behälterhalter auf, wobei für ein Verschwenken der Behälter eine Kurvensteuerung vorgesehen ist.

Dabei kann die Kurvensteuerung als mechanische Kurvenführung, beispielsweise in Form einer Kurvenscheibe, ausgestaltet sein. Die mechanische Kurvenführung bewirkt durch eine mechanisch Zwangsführung die Abstandänderung der an den Behälterhaltern aufgenommenen Behälter entlang der Transportstrecke sowie die zuvor beschriebene Rückstellbewegung.

Als Alternative zu einer mechanischen Kurvenführung kann beispielsweise auch vorgesehen sein, dass zur Bereitstellung der Kurvensteuerung die Behälterhalter jeweils über einen Stellmotor an dem Träger angeordnet sind. Eine solche Ausgestaltung ist zwar hinsichtlich der Konstruktion und Steuerung aufwendiger, zeichnet sich aber durch ein hohes Maß an Flexibilität und Anpassbarkeit aus.

Die vorliegende Erfindung betrifft gleichermaßen die Behälterhandhabungsanordnung, welche lediglich für die Aufnahme von Behältern vorgesehen ist und des Weiteren auch die Behälterhandhabungsanordnung, an der die Behälter bei dem Betrieb aufgenommen sind.

In diesem Zusammenhang ist besonders bevorzugt vorgesehen, dass an den zuvor beschriebenen Behälterhaltern des Teilungsverzugssterns Behälter in Form von Kunststoffflaschen aufgenommen sind. Alternativ kann der Teilungsverzugsstern aber auch für die Handhabung anderer Behälter wie beispielsweise Glasflaschen, Dosen oder Vorformlinge für die Bildung von Kunststoffflaschen vorgesehen sein.

Kunststoffflaschen aus PET weisen üblicherweise einen ringförmigen Kragen auf, der auch als Neckring bezeichnet wird. Entsprechende PET-Flaschen können durch den Teilungsverzugsstern an dem ringförmigen Kragen auf besonders einfache Weise gehalten werden.

Die Behälterhalter können insbesondere aktive Greifer aufweisen, wobei eine entsprechende Öffnungs- und Schließbewegung auch weg- bzw. kurvengesteuert angetrieben sein kann.

Gegenstand der Erfindung ist schließlich auch ein Verfahren zur Handhabung von Behältern, wobei die Behälter kontinuierlich mit einem ersten Abstand zueinander zu einem Teilungsverzugsstern zugeführt und diesem an einer Aufnahmeposition übergeben werden, wobei die Behälter entlang einer Transportstrecke derart zu einer Abgabeposition bewegt werden, dass sich der entlang ihrer Bahn bestimmte Abstand und ihrer Bahngeschwindigkeit ändern und wobei die Behälter an der Abgabeposition mit einem zweiten Abstand zueinander abgeführt werden, wobei erfindungsgemäß vorgesehen ist, dass an der Transportstrecke eine Arbeitseinrichtung angeordnet ist, welche entlang eines Zusammenwirkabschnittes mit den vorbeigeführten Behältern zusammenwirkt.

Bezüglich weiterer Ausstattungsmerkmale des Verfahrens wird auf die obigen Erläuterungen verwiesen.

Die Erfindung wird im Folgenden anhand von lediglich exemplarischen Figuren erläutert.

Es zeigen:
- Fig.1: eine stark schematisierte Darstellung einer Behälterhandhabungsanordnung zwischen zwei Karussellen,
- Fig. 2: der Verlauf der Geschwindigkeit von Behältern, die zwischen einer Aufnahmeposition und einer Abgabeposition von der Behälterhandhabungsanordnung bewegt werden,
- Fig. 3: ein Teilungsverzugsstern einer erfindungsgemäß Behälterhandhabungsanordnung,
- Fig.4: eine Kurvenscheibe des Teilungsverzugssterns gemäß der Fig. 3.

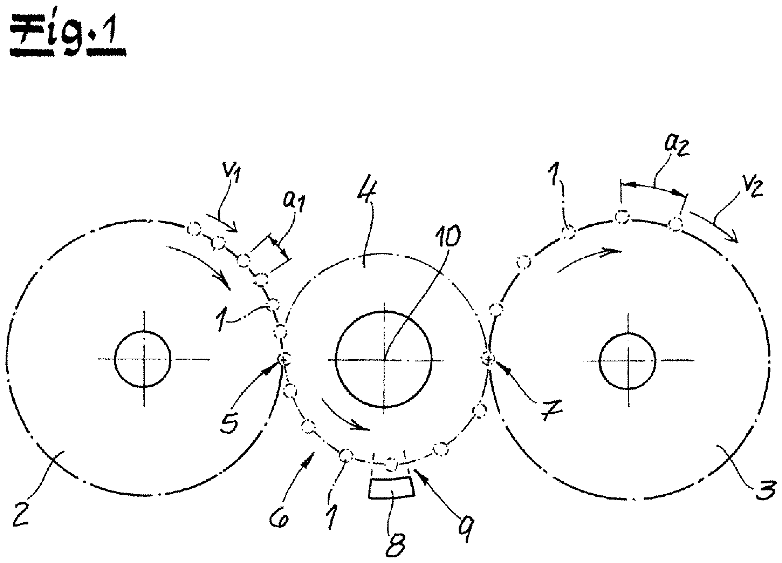

Die Fig. 1 zeigt den Ausschnitt einer Anlage in der Getränkeindustrie, bei der Behälter 1, beispielsweise in Form von PET-Einwegflaschen, in einer verblockten Anlage an einem ersten Karussell 2, einem zweiten Karussell 3 und dazwischen mit einem Teilungsverzugsstern 4 geführt sind.

Bei der kontinuierlichen Bewegung der Behälter 1 über das erste Karussell 2, den Teilungsverzugsstern 4 und das zweite Karussell 3 ergibt sich ein einheitlicher Durchsatz. Allerdings weisen in dem erläuterten Ausführungsbeispiel die Behälter 1 entlang ihrer Bahn an dem ersten Karussell 2 einen geringeren Abstand als an dem zweiten Karussell 3 auf. Es versteht sich, dass eine entsprechende Anpassung von Abstand und Geschwindigkeit auch entgegengesetzt erfolgen kann, wobei dann die Behälter 1 entsprechend ihrer Bahn an dem ersten Karussell 2 einen größeren Abstand als an dem zweiten Karussell 3 aufweisen.

Entsprechend ist die Geschwindigkeit v₂ der Behälter 1 entlang ihrer Bahn an dem zweiten Karussell 3 größer als die Geschwindigkeit v₁ an dem ersten Karussell 2. Unterschiedliche Abstände und Geschwindigkeiten können insbesondere vorgesehen sein, um für unterschiedliche Arbeitsschritte eine geeignete Verweildauer der Behälter 1 auf dem jeweiligen Karussell 2, 3 zur möglichen und/oder um für bestimmte Behandlungsschritte einen ausreichenden Platz bereitzustellen.

Der Teilungsverzugsstern 4 ist dazu vorgesehen, die Behälter 1 von dem ersten Abstand a₁ und der ersten Geschwindigkeit v₁ zu dem zweiten Abstand a₂ und der zweiten Geschwindigkeit v₂ zu überführen, wobei die Behälter 1 an einer Aufnahmeposition von dem ersten Karussell 2 aufgenommen, über eine Transportstrecke 6 transportiert und an einer Abgabeposition 7 zu dem zweiten Karussell 3 übergeben werden.

In dem dargestellten Ausführungsbeispiel erstreckt sich die Transportstrecke zum Zwecke einer einfachen Darstellung über einen Winkelbereich von 180°, wobei je nach Anordnung der Karusselle 2, 3 in der Praxis auch ein größerer oder kleinerer Winkelbereich vorgesehen sein kann. Bei einem möglichst großen Winkelbereich wird selbstverständlich auch eine größere Wegstrecke bereitgestellt, um die notwendige Anpassung von Abstand und Geschwindigkeit zu erreichen.

Erfindungsgemäß ist vorgesehen, dass an der Transportstrecke 6 eine Arbeitseinrichtung 8 angeordnet ist, welche dazu eingerichtet ist, mit den vorbeigeführten Behältern 1 über einen Zusammenwirkabschnitt 9 zusammenzuwirken. Der Zusammenwirkabschnitt 9 kann sich beispielsweise über einen Winkelbereich zwischen 2° und 20° bezogen auf eine Rotationssachse 10 des Teilungsverzugssterns 4 erstrecken. Bei der Arbeitseinrichtung 8 handelt es sich im Ausführungsbeispiel um eine Beschriftungseinrichtung, welche die Behälter 1 mittels Laser beschriftet.

Damit eine solche Laserbeschriftung auf einfache und definierte Weise erfolgen kann, sind die Behälter 1 entlang des Zusammenwirkabschnittes 9 mit einer gleichen Winkelgeschwindigkeit und einem gleichen Abstand zu der Rotationssachse 10 geführt und bewegen sich somit entlang des Zusammenwirkabschnittes 9 mit einer konstanten Bahngeschwindigkeit auf einem Kreisbogen.

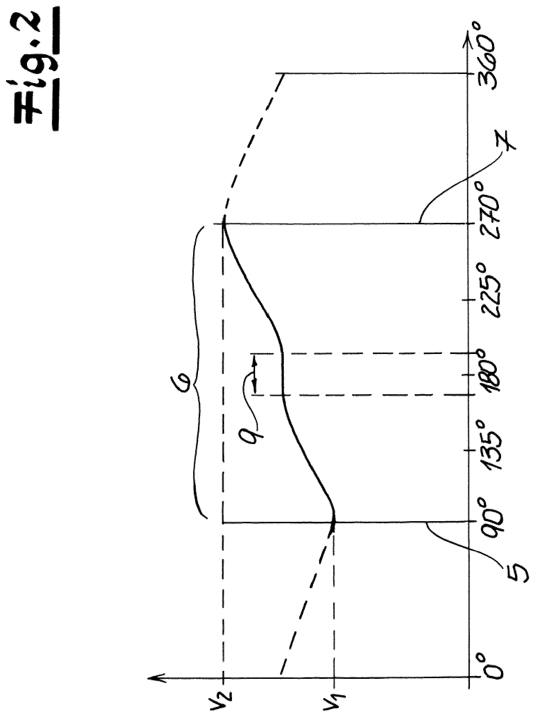

Hierzu wird exemplarisch ein möglicher Verlauf der Geschwindigkeit der einzelnen Behälter 1 an dem Teilungsverzugsstern 4 in der Fig. 2 wiedergegeben.

Die Aufnahmeposition 5 ist dabei einem Winkel des Teilungsverzugssterns 4 von 90° zugeordnet, wobei dort die Behälter 1 mit der ersten Geschwindigkeit v₁ von dem ersten Karussell 2 aufgenommen werden. Die Abgabe der Behälter 1 erfolgt davon ausgehend bei dem Winkel von 270° an der Abgabeposition 7, wobei dort die Behälter 1 von dem zweiten Karussell 3 mit einer höheren Geschwindigkeit v₂ und einem entsprechend vergrößerten Abstand a₂ übernommen werden.

Die Behälter 1 werden nach der Aufnahme von dem ersten Karussell 2 zunächst in üblicherweise beschleunigt, wobei dann jedoch entlang des Zusammenwirkabschnittes 9 die Geschwindigkeit konstant gehalten wird, um unter kontrollierten, einfach nachvollziehbaren Bedingungen ein Zusammenwirken mit der Arbeitseinrichtung 8, also hier das Bedrucken mittels Laser, zu ermöglichen. Danach werden die Behälter 1 weiter beschleunigt.

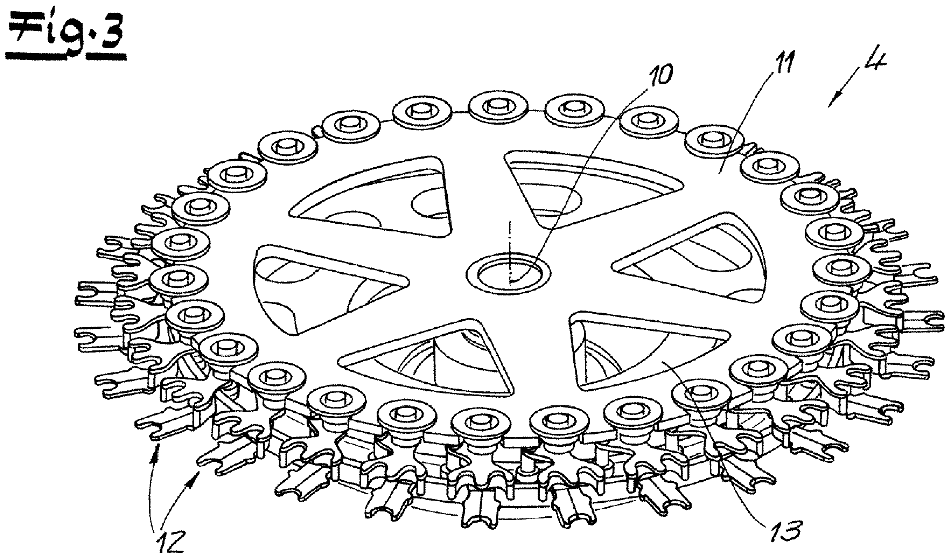

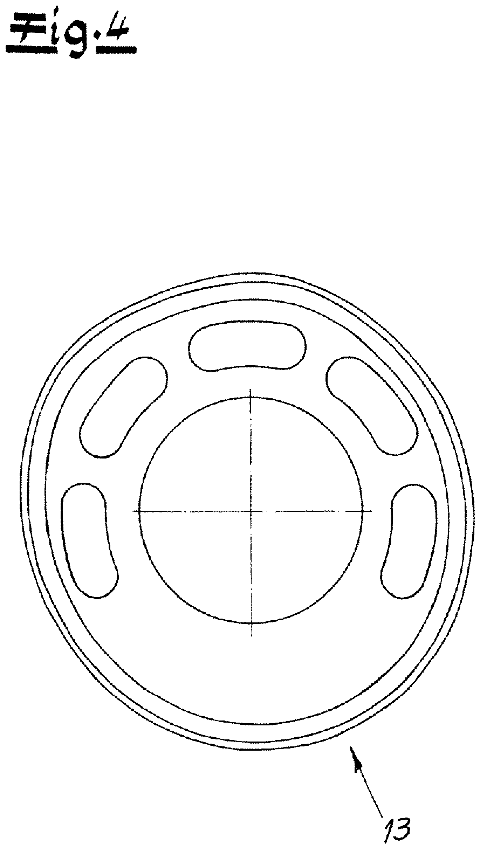

Die Fig. 3 zeigt eine mögliche Ausgestaltung des Teilungsverzugssterns 4 mit einem um die Rotationssachse 10 rotierenden Träger 11 und an den Träger 11 schwenkbar angeordneten Behälterhaltern 12, wobei für ein Verschwenken der Behälterhalter 12 während der Bewegung entlang der Transportstrecke 6 eine Kurvenführung 13, beispielsweise in Form einer in der Fig. 4 exemplarisch dargestellten Kurvenscheibe vorgesehen ist.

Die Kurvenführung ist so ausgeführt, dass die Behälter 1 gemäß der Fig. 2 zwischen der Aufnahmeposition 5 und der Abgabeposition 7 bewegt werden, wobei dann zwischen der Abgabeposition 7 und der Aufnahmeposition 5 die Behälterhalter 12 eine entsprechende Rückstellbewegung vollziehen.

Diese Rückstellbewegung ist in der Fig. 2 durch eine gestrichelte Linie zwischen 0 und 90° sowie 270 und 360° dargestellt.

### Bezugszeichenliste

- 1: Behälter
- 2: erstes Karussell
- 3: zweites Karussell
- 4: Teilungsverzugsstern
- 5: Aufnahmeposition
- 6: Transportstrecke
- 7: Abgabeposition
- 8: Arbeitseinrichtung
- 9: Zusammenwirkabschnitt
- 10: Rotationsachse
- 11: Träger
- 12: Behälterhalter
- 13: Kurvenführung

## Patentansprüche

1. Behälterhandhabungsanordnung mit einem eine Rotationsachse (10) aufweisenden Teilungsverzugsstern (4), welcher eine Aufnahmeposition (5) für die Aufnahme von in einem ersten Abstand (a₁) zueinander zugeführten Behälter (1), eine Abgabeposition (7) zur Abgabe der Behälter (1) mit einem zweiten Abstand (a₂) zueinander und eine Transportstrecke (6) zwischen der Aufnahmeposition (5) und der Abgabeposition (7) aufweist, **dadurch gekennzeichnet, dass** an der Transportstrecke (6) eine Arbeitseinrichtung (8) angeordnet ist, welche dazu eingerichtet ist, mit den vorbeigeführten Behältern (1) über einen Zusammenwirkabschnitt (9) zusammenzuwirken.

2. Behälterhandhabungsanordnung nach Anspruch 1, **dadurch gekennzeichnet, dass** der Zusammenwirkabschnitt (9) sich bezogen auf die Rotationsachse (10) über einen Winkelbereich zwischen 4° bis 20° erstreckt.

3. Behälterhandhabungsanordnung nach 1 oder 2, **dadurch gekennzeichnet, dass** die Transportstrecke (6) sich bezogen auf die Rotationsachse (10) über einen Winkelbereich zwischen 90° und 320° erstreckt.

4. Behälterhandhabungsanordnung nach einem der Ansprüche 1 bis 3, **dadurch gekennzeichnet, dass** der Teilungsverzugsstern (4) dazu eingerichtet ist, die Behälter (1) entlang des Zusammenwirkabschnitts (9) mit einer konstanten Bahngeschwindigkeit zu führen.

5. Behälterhandhabungsanordnung nach Anspruch 4, **dadurch gekennzeichnet, dass** der Teilungsverzugsstern (4) dazu eingerichtet ist, die Behälter (1) entlang des Zusammenwirkabschnitts (9) mit einer gleichbleibenden Winkelgeschwindigkeit und einem gleichbleibenden Abstand zu der Rotationsachse (10) zu führen.

6. Behälterhandhabungsanordnung nach einem der Ansprüche 1 bis 5, **dadurch gekennzeichnet, dass** die Arbeitseinrichtung (8) eine Beschriftungseinrichtung ist.

7. Behälterhandhabungsanordnung nach Anspruch 6, **dadurch gekennzeichnet, dass** die Beschriftungseinrichtung als Laserbeschriftungseinrichtung ausgeführt ist.

8. Behälterhandhabungsanordnung nach einem der Ansprüche 1 bis 7, **dadurch gekennzeichnet, dass** der Teilungsverzugsstern (4) einen Träger (11) und an dem Träger (11) schwenkbar angeordnete Behälterhalter (12) aufweist, wobei für ein Verschwenken der Behälterhalter (12) während der Bewegung entlang der Transportstrecke (6) eine Kurvensteuerung (13) vorgesehen ist.

9. Behälterhandhabungsanordnung nach Anspruch 8, **dadurch gekennzeichnet, dass** die Kurvensteuerung (13) als mechanische Kurvenführung ausgestaltet ist.

10. Behälterhandhabungsanordnung nach Anspruch 8, **dadurch gekennzeichnet, dass** zur Bereitstellung der Kurvensteuerung (13) die Behälterhalter (12) jeweils über einen Stellmotor an dem Träger (11) angeordnet sind.

11. Behälterhandhabungsanordnung nach einem der Ansprüche 8 bis 10, **dadurch gekennzeichnet, dass** an den Behälterhaltern (12) des Teilungsverzugsstern (4) Behälter (1) in Form von Kunststoffflaschen aufgenommen sind.

12. Behälterhandhabungsanordnung nach Anspruch 11, **dadurch gekennzeichnet, dass** die Kunststoffflaschen aus PET gebildet sind und einen ringförmigen Kragen aufweisen.

13. Verfahren zur Handhabung von Behältern (1), wobei die Behälter (1) kontinuierlich mit einem ersten Abstand (a₁) zueinander zu einem Teilungsverzugsstern (4) zugeführt und diesem an einer Aufnahmeposition (5) übergeben werden, wobei die Behälter (1) entlang einer Transportstrecke (6) derart zu einer Abgabeposition (7) bewegt werden, dass sich ihr entlang ihrer Bahn bestimmte Abstand ändert und wobei die Behälter (1) an der Abgabeposition (7) mit einem zweiten Abstand (a₂) zueinander und abgeführt werden, **dadurch gekennzeichnet, dass** an der Transportstrecke (6) eine Arbeitseinrichtung (8) angeordnet ist, welche entlang eines Zusammenwirkabschnitt (9) mit den vorbeigeführten Behältern (1) zusammenwirkt.
